# EUROPÄISCHE PATENTSCHRIFT

(11) **EP 0 489 079 B1**
(45) Veröffentlichungstag und Bekanntmachung des Hinweises auf die Patenterteilung: **21.12.1994**
(21) Anmeldenummer: 90912916.5
(22) Anmeldetag: 16.08.1990
(51) Int. Cl.: H04N 5/782, H04N 7/087

(54) **VERFAHREN UND EINRICHTUNG ZUM SENDERSEITIG GESTEUERTEN BETÄTIGEN EINES EMPFÄNGERSEITIGEN GERÄTES**
PROCESS AND DEVICE FOR SENDER-SIDE CONTROLLED OPERATION OF A RECEIVER-SIDE APPLIANCE
PROCEDE ET DISPOSITIF POUR L'ACTIONNEMENT, COMMANDE COTE EMETTEUR, D'UN APPAREIL COTE RECEPTEUR

(30) Priorität: 25.08.1989 DE 3928188
(43) Veröffentlichungstag der Anmeldung: 10.06.1992
(73) Patentinhaber: Deutsche Thomson-Brandt GmbH, 78010 Villingen-Schwenningen (DE)
(72) Erfinder: STORZ, Achim, D-7740 Triberg 4 (DE); EIGELDINGER, Norbert, D-7730 Villingen (DE)
(74) Vertreter: Einsel, Robert, Dipl.-Ing.
(86) Internationale Anmeldenummer: EP9001338
(87) Internationale Veröffentlichungsnummer: WO9103126

(56) Entgegenhaltungen:
- WO-A-87/01001

## Beschreibung

Die Erfindung betrifft ein Verfahren zum senderseitig gesteuerten Betätigen eines empfängerseitigen Gerätes in einer vorbestimmten Betriebsart mittels Sendebeiträgen individualisierend zugeordneter Kennsignale gemäß dem Oberbegriff des Anspruchs 1. Die Erfindung betrifft ferner eine empfängerseitige Steuerungseinrichtung zur Durchführung des Verfahrens.

Derartige Verfahren und/oder Steuerungseinrichtungen dienen beispielsweise dazu, ein korrektes Aufzeichnen des durch das betreffende Kennsignal charakterisierten Sendebeitrages zu ermöglichen. Das Kennsignal wird als zusätzliche Information zum Ton- und/oder Videosignal übertragen, etwa über einen sogenannten Hilfsträger, eine sogenannte Datenzeile im Videosignal oder dergleichen.

Durch die DE-A1-35 28 467 ist eine Steuerungseinrichtung der eingangs genannten Art bekannt, bei der Daten des Kennsignals eines aktuell empfangenen Sendebeitrages nicht von Hand eingegeben zu werden brauchen, sondern automatisch dem mit dem Sendebeitrag übertragenen Kennsignal entnommen werden. Genau solange, wie dieses Kennsignal noch vorliegt, bleibt ein hiermit gesteuertes Gerät in einer vorbestimmten Betriebsart, beispielsweise ein Videorecorder im Aufzeichnungsmodus.

Will ein Benutzer jedoch nicht einen aktuell empfangenen Sendebeitrag aufzeichnen, sondern erst den daran anschließend nächsten oder übernächsten oder noch später folgenden Sendebeitrag, so sieht er sich bei der vorbekannten Steuerungseinrichtung gleichwohl gezwungen, für Zwecke der sendergesteuerten Aufzeichnungsbetriebsart die hierfür benötigten Daten des Kennsignals in den Programmierteil des Videorecorders einzeln manuell einzugeben.

Der Erfindung liegt die Aufgabe zugrunde, ein Verfahren und/oder eine Steuerungseinrichtung der eingangs genannten Art zu schaffen, durch die es dem Benutzer ermöglicht ist, auf einfache Weise einen sendergesteuerten Betrieb für einen später als der aktuelle Sendebeitrag empfangenen Sendebeitrag bei dem empfängerseitigen Gerät vorzuprogrammieren, ohne daß er dazu die hierfür benötigten Daten des dem gewünschten Sendebeitrag zugeordneten Kennsignals einzeln manuell einzugeben braucht.

Diese Aufgabe wird erfindungsgemäß durch die in Anspruch 1 bzw. durch die in Anspruch 8 angegebenen Merkmale gelöst. Weiterbildungen der Erfindung ergeben sich aus den Unteransprüchen.

Das erfindungsgemäße Verfahren und die erfindungsgemäße Steuerungseinrichtung bieten den Vorteil, daß die bei der manuellen Eingabe relativ umfangreicher Daten häufig auftretenden Ablese- und/oder Tippfehler weitgehend vermieden sind. Der Benutzer braucht sich bei der Eingabe von Daten für in absehbarer Zeit bevorstehende Sendebeiträge nicht mehr zunächst um das Auffinden des einem gewünschten Sendebeitrag zugeordneten Kennsignals - beispielsweise von in Rundfunkzeitschriften veröffentlichte VPS-Daten - zu kümmern, noch braucht er diese dann auch noch mühsam vollständig einzutasten. Er muß nur noch angeben, auf oder bis zum wievielten Sendebeitrag nach dem aktuell empfangenen Sendebeitrag sein Interesse zielt oder reicht: das Programmieren von entsprechenden Kennsignal-Daten geschieht dann automatisch.

In Weiterbildung der Erfindung gemäß Anspruch 2 ist vorgesehen, daß mit der einzugebenden Anzahl derjenige Sendebeitrag automatisch programmierbar ist, der entsprechend dieser Anzahl nachfolgend an den aktuell empfangenen Sendebeitrag empfangen wird. Soll beispielsweise der nächste oder erst der übernächste Sendebeitrag programmiert werden, so braucht lediglich die Anzahl "1" bzw. "2" eingegeben zu werden.

Bei der Weiterbildung gemäß Anspruch 3 dient stattdessen die eingegebene Anzahl dazu, festzulegen wieviel Sendebeiträge im im wesentlichen unmittelbaren Anschluß an den aktuell empfangenen Sendebeitrag automatisch programmiert werden sollen.

Vorteilhafte Weiterbildungen der Erfindung sind in den Unteransprüchen beschrieben.

Weitere Vorteile, Merkmale und Einzelheiten der Erfindung ergeben sich aus der nachfolgenden Beschreibung eines Ausführungsbeispiels anhand der Zeichnung. Dabei zeigen:
- Fig. 1: ein Ablaufdiagramm eines Ausführungsbeispiels nach dem erfindungsgemäßen Verfahren und
- Fig. 2: in einer stark vereinfachten Darstellung ein Blockschaltbild eines Ausführungsbeispiels einer erfindungsgemäßen empfängerseitigen Steuerungseinrichtung.

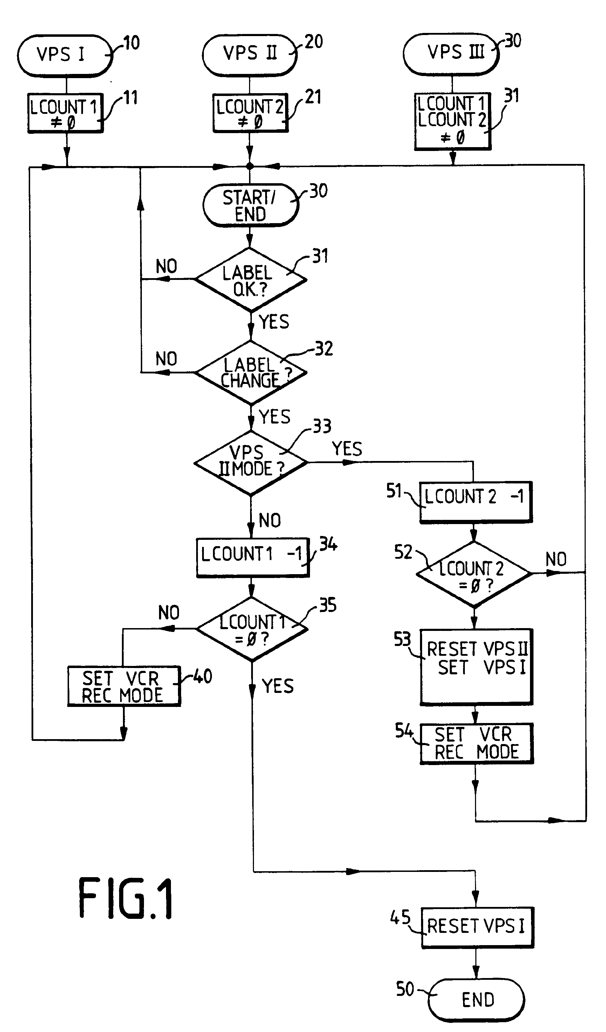

Das in Fig. 1 dargestellte Ablaufdiagramm nach dem erfindungsgemäßen Verfahren zeigt ein Ausführungsbeispiel, bei dem das Verfahren für einen im übrigen nicht dargestellten Videorecorder Anwendung findet. Dieser Videorecorder ist - entsprechend beispielsweise der Technischen Richtlinie Nr. 8 R 2 (Ausgabe 2, April 1987) der öffentlich-rechtlichen Rundfunkanstalten in der Bundesrepublik Deutschland - zum senderseitig gesteuerten Betätigen für den Aufzeichnungsbetrieb mittels VPS-Kennungen eingerichtet.

Der Benutzer hat die Auswahl zwischen drei VPS-gesteuerten Aufzeichnungsmodi VPS I, VPS II und VPS III, deren Ausgangspunkte 10, 20 bzw. 30 schematisch dargestellt sind.

Beim Aufrufen des Modus VPS I wird der Benutzer an einer Stelle 11 aufgefordert, einen ersten Zähler LCOUNT1 auf eine natürliche Zahl (also ungleich 0), beispielsweise auf "m", zu setzen, um damit anzugeben, daß er das Aufzeichnen der auf den aktuell empfangenen Sendebeitrag folgenden m nächsten Sendebeiträge wünscht.

Ruft der Benutzer stattdessen den Modus VPS II auf, so wird er entsprechend an einer Stelle 21 aufgefordert, einen zweiten Zähler LCOUNT2 auf eine natürliche Zahl, beispielsweise auf "n", zu setzen, um damit anzugeben, daß er das Aufzeichnen ab dem auf den aktuell empfangenen Sendebeitrag folgenden n-ten Sendebeitrag wünscht.

Der Betrieb im Modus VPS III stellt eine Kombination der beiden anderen Modi dar; wird dieser Modus VPS III aufgerufen, so wird der Benutzer an einer Stelle 31 aufgefordert, die natürlichen Zahlen m, n für die Zähler LCOUNT1 bzw. LCOUNT2 einzugeben, um damit anzugeben, daß er das Aufzeichnen von m aufeinanderfolgenden Sendebeiträgen ab dem auf den aktuell empfangenen Sendebeitrag folgenden n-ten Sendebeitrag wünscht.

Gleichgültig, welcher der drei Modi gewählt wurde, wird nun das Verfahren an einer mit "START/END" symbolisch bezeichneten Stelle 30 fortgesetzt. Hier werden auf der eingestellten Frequenz empfangene VPS-Kennungen ermittelt und decodiert, sodann (31, "LABEL OK?") auf Plausibilität gemäß dem VPS-Standard überprüft. Wird hier keine korrekte VPS-Kennung erkannt ("NO"-Abzweigung), so wird zur Stelle 30 zurückgesprungen; gegebenenfalls erfolgt dies mehrmals, bis nach einer vorbestimmten Anzahl von Sprüngen das Verfahren abgebrochen wird.

Andernfalls ("YES"-Abzweigung) erfolgt an der Stelle 32 ("LABEL CHANGE?") eine Überprüfung, ob sich seit dem letzten Durchlauf dieser Stelle 32 die VPS-Kennung geändert hat. Ist dies nicht der Fall, so wird auch von hier aus zu der Stelle 30 zurückgesprungen, diesmal allerdings ohne die Zusatzbedingung, daß das Verfahren nach einer vorbestimmten Anzahl solcher Sprünge abzubrechen ist: es liegt ja eine plausible VPS-Kennung vor und somit sind diese Sprünge durchaus "erwünscht".

Hat sich die VPS-Kennung jedoch seit der letzten an der Stelle 32 durchgeführten Überprüfung geändert, so erfolgt nunmehr eine Abzweigung zu einer Stelle 33 ("VPS II MODE?"), an der überprüft wird, ob das Verfahren im Modus VPS II arbeitet (wobei an dieser Stelle auch ein erfolgtes Aktivieren des Modus VPS III als Arbeiten im Modtts VPS II gewertet wird).

Ist dies nicht der Fall - d.h. es wird im Modus VPS I gearbeitet - so wird im nächsten Schritt an einer Stelle 34 der Stand des Zählers LCOUNT1 um eins verringert und anschließend (35) überprüft, ob er nun den Wert null erreicht hat. Wird dies verneint, so wird der Videorecorder an einer Stelle 40 in die Aufzeichnungsbetriebsart versetzt oder - falls er sich schon in dieser Betriebsart befindet - darin belassen, und es erfolgt ein Sprung zurück zu der Stelle 30.

Wurde stattdessen an der Stelle 35 festgestellt, daß der Zähler LCOUNT1 den Wert null erreicht hat, so erfolgt ein Sprung zu einer Stelle 45 ("RESET VPS I"), an der das Versetzen des Videorecorders in den Modus VPS I gelöscht wird und anschließend daran an einer Stelle 50 ("END") das Verfahren beendet wird.

Wurde an der Stelle 33 die Frage nach dem Arbeiten im Modus VPS II bejaht, so erfolgt hier ein Sprung zu einer Stelle 51, an der Stand des Zählers LCOUNT2 um eins verringert wird und anschließend (52) überprüft wird, ob er nun den Wert null erreicht hat. Ist dies nicht der Fall, so erfolgt ein Sprung zurück zu der Stelle 30 ("START/END).

Andernfalls wird an einer Stelle 53 ("RESET VPS II, SET VPS I") das Versetzen des Videorecorders in den Modus VPS II gelöscht und er wird in den Modus VPS I versetzt. Sodann (54) wird er in die Aufzeichnungsbetriebsart versetzt und anschließend hieran zu der Stelle 30 ("START/END") zurückgesprungen. Der Videorecorder arbeitet nun für den Rest des Verfahrens im Modus VPS I, wie dies zuvor beschrieben wurde.

Es versteht sich, daß alle vorstehend beschriebenen Abfragen, Entscheidungsschritte und dergleichen, sofern nicht ausdrücklich etwas anderes vermerkt ist, selbsttätig erfolgen.

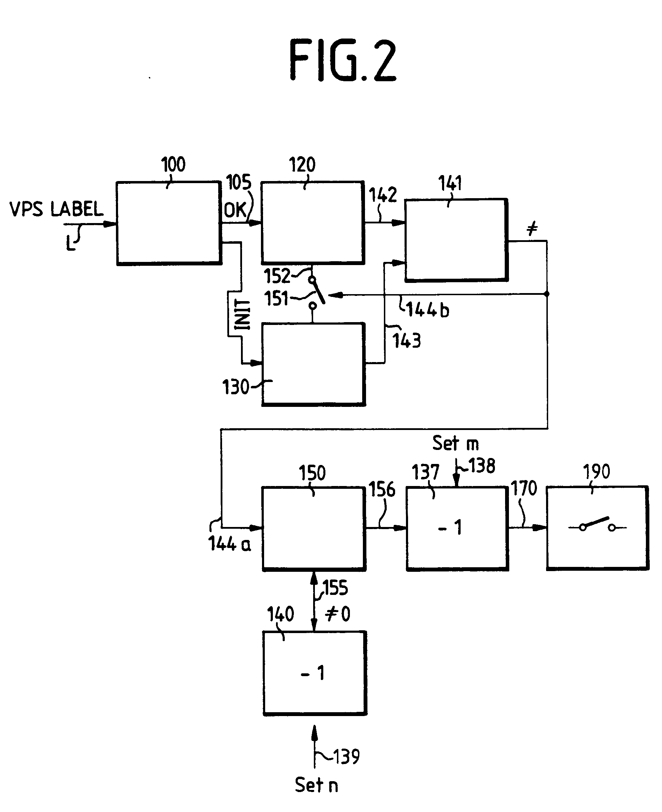

Ein in Fig. 2 in einem Blockschaltbild dargestelltes Ausführungsbeispiel einer erfindungsqemäßen empfängerseitigen Steuerungseinrichtung ist ebenfalls Teil eines im übrigen nicht dargestellten Videorecorders, der nach dem zu Fig. 1 beschriebenen Verfahren arbeitet.

Beim Aktivieren eines der VPS-Modi VPS I, VPS II oder VPS III wird eine einem Vergleicher 100 über eine Leitung L zugeführte VPS-Kennung ("VPS-LABEL") auf Plausibilität anhand der im VPS-Standard festgelegten Kriterien überprüft. Entspricht die VPS-Kennung dem Standard, so wird es über eine Leitung 105 in einen Speicher 120 übertragen. Das beim Starten des Vergleichsvorgangs erstmals als korrekt erkannte VPS-Kennung wird zugleich über eine Leitung INIT in einen Speicher 130 übertragen.

Der Benutzer kann einen Beitragszähler 137 mit Hilfe einer nicht dargestellten, mit dem Beitragszähler 137 über eine Leitung 138 verbunden Tastatur auf die Anzahl m der aufzuzeichnenden Sendebeiträge setzen. In ähnlicher Weise kann er über eine Leitung 139 einen Wartezähler 140 auf die Anzahl der Sendebeiträge setzen, die vor Beginn der Aufzeichnungsbetriebsart ignoriert werden sollen.

Ein Vergleicher 141 ist mit dem Speicher 120 über eine Leitung 142 und mit dem Speicher 130 über eine Leitung 143 verbunden, über die (142, 143) ihm die jeweiligen Speicherinhalte (120 bzw. 130) zugeführt werden und die er laufend miteinander vergleicht. Stellt er Ungleichheit fest, so gibt er über Leitungen 144a, 144b eine Schaltspannung an einen Vergleicher 150 bzw. an einen Schalter, letzterer schließt hierdurch eine von dem Speicher 120 an den Speicher 130 führende Leitung 152 und ermöglicht dadurch das Übertragen der in dem Speicher 120 enthaltenen VPS-Kennung an den Speicher 130. Gleichzeitig überprüft der Vergleicher 150 über eine Leitung 155, ob der Wartezähler 140 auf null steht. Ist dies der Fall, so erhält der Beitragszähler 137 über eine Leitung 156 den Befehl zum Decrementieren um eins.

Wird der Beitragszähler 137 hierdurch auf einen Wert kleiner null gesetzt, so gibt er über eine Leitung 170 einen Schaltspannung an eine Schalteinrichtung 190 ab, die den Videorecorder auf STOP (= Aufnahme beendet) schaltet; hat der Beitragszähler 137 einen Wert größer oder gleich null, so wird der Videorecorder auf RECORD (= Aufnahme aktiv) geschaltet. Steht der Wartezähler 140 nicht auf null, so wird dieser um eins decrementiert.

## Patentansprüche

1. Verfahren zum senderseitig gesteuerten Betätigen eines empfängerseitigen Gerätes in einer vorbestimmten Betriebsart mittels Sendebeiträgen individualisierend zugeordneter Kennsignale, wobei das einem jeweiligen Sendebeitrag senderseitig zugeordnete Kennsignal während der gesamten Dauer des Sendebeitrages übertragen wird, dadurch gekennzeichnet, daß das empfängerseitige Gerät eine Steuerungseinrichtung mit Mitteln aufweist, durch die ein beim Aktivieren der Steuerungseinrichtung empfangenes erstes Kennsignal und zeitlich anschließend an dieses erste Kennsignal eine vorbestimmte Anzahl von - verglichen jeweils aufeinanderfolgend, miteinander und/oder mit dem ersten Kennsignal - unterschiedlichen Kennsignalen mitgezählt wird und durch die in den Kennsignalen enthaltene Daten des beim Erreichen der vorbestimmten Anzahl empfangenen Kennsignals und/oder des davor empfangenen und/oder des ersten Kennsignals automatisch gespeichert werden.

2. Verfahren nach Anspruch 1, dadurch gekennzeichnet, daß das Erreichen der vorbestimmten Anzahl abgewartet wird, bis das Gerät erstmals seit dem Empfang des ersten Kennsignals in die vorbestimmte Betriebsart versetzt wird und darin verbleibt, solange das beim Erreichen der vorbestimmten Anzahl empfangene Kennsignal empfangen wird.

3. Verfahren nach Anspruch 1, dadurch gekennzeichnet, daß erstmals ab dem Empfang des ersten Kennsignals das Gerät in die vorbestimmte Betriebsart versetzt wird und bis zum Erreichen der vorbestimmten Anzahl darin verbleibt, solange das erste Kennsignal, die darauf folgenden Kennsignale und das beim Erreichen der vorbestimmten Anzahl empfangene Kennsignal jeweils empfangen werden.

4. Verfahren nach einem der vorstehenden Ansprüche, dadurch gekennzeichnet, daß die Kennsignale dem VPS-oder dem RDS-Standard oder dergleichen entsprechend empfangen werden.

5. Verfahren nach einem der vorstehenden Ansprüche, dadurch gekennzeichnet, daß sich der Vergleich auf solche in den jeweiligen Kennsignalen enthaltene Daten bezieht, bei denen maßgebliche Daten, vorzugsweise VPS-bzw. RDS-Uhrzeit oder VPS- bzw. RDS-Tag und VPS- bzw. RDS-Uhrzeit, betroffen sind.

6. Verfahren nach einem der vorstehenden Ansprüche , dadurch gekennzeichnet, daß das Gerät während des Empfangs des ersten Kennsignals noch nicht in die vorbestimmte Betriebsart versetzt wird.

7. Verfahren nach einem der vorstehenden Ansprüche, dadurch gekennzeichnet, daß sie einen in der vorbestimmten Betriebsart erfolgenden Betrieb des empfängerseitigen Gerätes unterbricht, wenn ein eine senderseitige Unterbrechung oder Störung kennzeichnendes Kennsignal empfangen wird, und daß sie hiernach bei erneutem Empfang des unmittelbar vor der Unterbrechung oder Störung empfangenen Kennsignals erneut den Betrieb des empfängerseitigen Gerätes in der vorbestimmten Betriebsart bewirkt.

8. Steuerungseinrichtung zur Durchführung des Verfahrens nach einem der vorstehenden Ansprüche, dadurch gekennzeichnet, daß sie
(a) einen Speicher (120, 130) aufweist, in den ab dem Aktivieren der Steuerungseinrichtung automatisch maßgebliche Daten, die in dem ersten Kennsignal enthalten sind, und maßgebliche Daten, die in einem dem ersten Kennsignal nachfolgenden Kennsignal enthalten sind, und/oder maßgebliche Daten, die in einem hierzu nachfolgenden Kennsignal enthalten sind, eingespeichert werden, und
(b) einen Vergleicher (141) aufweist, der die gemäß (a) gespeicherten Daten ganz oder teilweise miteinander vergleicht, und
(c) einen Zähler (137, 140) aufweist, der die Anzahl von gemäß (b) als unterschiedlich festgestellten Kennsignalen zählt und von dem beim Erreichen der vorbestimmten Anzahl ein Schlußsignal abgegeben wird, und
(d) eine Koinzidenzeinrichtung aufweist, die durch das Schlußsignal aktiviert wird und solange aktiviert bleibt, wie das beim Aktivieren empfangene Kennsignal empfangen wird, und durch die das Gerät in die vorbestimmte Betriebsart versetzt wird, solange die Koinzidenzeinrichtung aktiviert bleibt, und
(e) eine Abschalteinrichtung aufweist, die durch das Schlußsignal aktiviert wird, die von der Koinzidenzeinrichtung ein das Ende der Aktivität der Koinzidenzeinrichtung kennzeichnendes Signal erhält und die sodann die Steuerungseinrichtung abschaltet.

9. Steuerungseinrichtung nach Anspruch 8, dadurch gekennzeichnet, daß die Koinzidenzeinrichtung auch durch die vor dem Erreichen der vorbestimmten Anzahl empfangenen Kennsignale aktivierbar ist.

10. Steuerungseinrichtung nach einem der vorstehenden Ansprüche, dadurch gekennzeichnet, daß das empfängerseitige Gerät ein Aufzeichnungsgerät, insbesondere ein Audio- oder ein Videorecorder (VCR), und die vorbestimmte Betriebsart der Aufzeichnungsbetrieb ist.

11. Steuerungseinrichtung nach einem der Ansprüche 1 bis 9, dadurch gekennzeichnet, daß das empfängerseitige Gerät ein Rundfunkempfangsgerät, insbesondere ein Hörfunk- oder ein Fernsehempfangsgerät, und die vorbestimmte Betriebsart der Wiedergabebetrieb des Gerätes ist.

12. Steuerungseinrichtung nach Anspruch 10 oder 11, dadurch gekennzeichnet, daß ein Schalter zum schnellen Einleiten des Aufzeichnungsbetriebs vorgesehen ist (VPS-Quick-Start-Schalter), bei dessen Betätigen zugleich auch die Steuerungseinrichtung aktiviert wird.

13. Steuerungseinrichtung nach Anspruch 12, dadurch gekennzeichnet, daß die vorbestimmte Anzahl festgelegt wird durch die kurz auf ein erstes Betätigen des Schalters erfolgende Anzahl von weiteren kurz aufeinander folgenden Betätigungen des Schalters oder durch Betätigen einer Zifferntastatur.

14. Steuerungseinrichtung nach einem der vorstehenden Ansprüche, dadurch gekennzeichnet, daß eingebbar ist, ob sich die vorbestimmte Anzahl auf die Anzahl der bis zum Versetzen des Geräts in die vorbestimmte Betriebsart abzuwartenden Sendebeiträge bezieht oder ob sie sich auf die Anzahl der in der vorbestimmten Betriebsart durchzuführenden Betriebsabschnitte des Geräts bezieht.

15. Steuerungseinrichtung nach einem der vorstehenden Ansprüche, dadurch gekennzeichnet, daß hinsichtlich des Erreichens der vorbestimmten Anzahl von unterschiedlichen Kennsignalen nur solche Kennsignale berücksichtigt werden, die Sendebeiträgen individualisierend zugeordnete Kennsignale betreffen und zu denen vorzugsweise folgende Kennsignale gemäß dem VPS-Standard nicht zählen: Status-Kennsignale, Unterbrechungs-Kennsignale oder störungsbehaftete Kennsignale.

## Claims

1. Method for controlling the operation of a device on the receiver side in a predetermined operating mode from the station (transmitter) side by means of characteristic signals individually assigned to broadcasts whereby, a particular characteristic signal assigned to a broadcast from the station side is transmitted during the entire duration of the broadcast, characterized in that the device on the receiver side has a control system with means through which a first characteristic signal received upon activating the control system and following, in time, this first characteristic signal, a predetermined number of - compared respectively with each other, successively, and/ or with the first characteristic signal - different characteristic signals are taken into account (counted in) and through which data - contained in the characteristic signal - of the characteristic signal received on reaching the predetermined number and/ or the one received before that and/ or the first characteristic signal is automatically stored.

2. Method according to claim 1, characterized in that the device is switched into the predetermined operating mode for the first time since receiving the first characteristic signal after the predetermined number has been reached and remains therein so long as the characteristic signal received on reaching the predetermined number is received.

3. Method according to claim 1, characterized in that the device is switched into the predetermined operating mode for the first time immediately upon receiving the first characteristic signal and remains therein until the predetermined number is reached so long as the first characteristic signal, tile following characteristic signals an the characteristic signal received on attainment of the predetermined number are respectively received.

4. Method according to one of the preceding claims, characterized in that the characteristic signals are received according to the VPS, RDS or similar standards.

5. Method according to one of the preceding claims, characterized in that the comparison refers to such data contained in the respective characteristic signals with which ruling data is affected, preferably VPS or RDS time or VPS or RDS day and VPS or RDS time.

6. Method according to one of the preceding claims, characterized in that the device is not yet switched into the predetermined operating mode during the reception of the first characteristic signal.

7. Method according to one of the preceding claims, characterized in that it (sic) interrupts one of the operations occurring in the device on the receiver side in the predetermined operating mode if a characteristic signal characterizing an interruption or disturbance from the station side is received and that hereafter, it (sic) causes a new operation of the device on the receiver side in the predetermined operational mode upon reception of the renewal of the characteristic signal received directly before the interruption or disturbance.

8. Control system for the execution of the method according to one of the preceding claims, characterized in that it
(a) has a memory (120, 130) which, from the activation of the control system on, automatically contains ruling data, which is contained in the first characteristic signal, and ruling data, which is contained in a characteristic signal following the first characteristic signal, and/or ruling data, which is contained in a characteristic signal following the latter one; and
(b) has a comparator (141) which completely or partly compares the data stored according to (a) with each other; and
(c) has a counter (137, 140) which counts the number of characteristic signals established as different according to (b) and gives a release signal on reaching the predetermined number; and
(d) has a coincidence facility which is activated by the release signal and stays active as long as the characteristic signal received upon activation is received, and through which the device is switched into the predetermined operating mode so long as the coincidence facility stays active; and
(e) has a cut-off facility, which is activated by the release signal, which receives from the coincidence facility a signal which characterizes the end of the activity of the coincidence facility and then switches off the control system.

9. Control system according to claim 8, characterized in that the coincidence facility can also be activated by the characteristic signal received before reaching the predetermined number.

10. Control system according to one of the preceding claims, characterized in that the device on the receiver side is a recording device, in particular an audio or a video recorder (VCR), and the predetermined operating mode is the recording mode.

11. Control system according to one of the claims 1 through 9, characterized in that the device on the receiver side is a broadcast receiver, in particular a radio or television broadcast receiver, and the predetermined operating mode is the reproduction mode of the device.

12. Control system according to claim 10 or 11, characterized in that as witch is provided for the fast initiation of there cording mode (VPS Quickstart switch) the operation of which also activates the control system.

13. Control system according to claim 12,characterized in that the predetermined number is established by the number of further quick successive following operations of the switch following shortly after a first operation of the switch or through operation of a number keyboard.

14. Control system according to one of the preceding claims, characterized in that input can occur whether the predetermined number refers to the number of broadcasts to let pass before the device is to be switched into the predetermined operating mode or whether it refers to the number of operating sections to be carried out in the device in the predetermined operating mode.

15. Control system according to one of the preceding claims, characterized in that with regard to reaching the predetermined number of different characteristic signals only such characteristic signals are allowed which concern characteristic signals that are assigned by the transmitter to broadcasts in an individually characterizing way and to which, preferably, the following characteristic signals according to the VPS standard do not belong: status characteristic signals interruption characteristic signals or interference afflicted characteristic signals.

## Revendications

1. Procédé pour l'actionnement commandé côté émetteur d'un appareil côté récepteur dans un mode prédéfini au moyen de signaux d'identification affectés aux émissions en les individualisant, le signal d'identification affecté côté émetteur à une émission respective étant transmis pendant toute la durée de l'émission, **caractérisé en ce** que l'appareil côté récepteur présente un dispositif de commande avec des moyens par lesquels un premier signal d'identification reçu lors de l'activation du dispositif de commande et un nombre prédéfini de différents signaux d'identification - ceux-ci étant différents respectivement de ceux qui se suivent les uns les autres et/ou du premier signal d'identification - étant compté ensuite dans le temps après ce premier signal d'identification dans le temps et par lesquels des données contenues dans les signaux d'identification du signal d'identification reçu lorsque le nombre prédéfini a été atteint et/ou du signal d'identification reçu auparavant et/ou du premier signal d'identification sont mises en mémoire automatiquement.

2. Procédé selon la revendication 1, **caractérisé en ce** que l'on attend le fait que le nombre prédéfini soit atteint jusqu'à ce que l'appareil soit mis pour la première fois depuis la réception du premier signal d'identification dans le mode prédéfini et y reste tant que le signal d'identification reçu lorsque le nombre prédéfini est atteint est reçu.

3. Procédé selon la revendication 1, **caractérisé en ce** que pour la première fois depuis la réception du premier signal d'identification l'appareil est mis dans le mode prédéfini et y reste jusqu'à ce que nombre prédéfini soit atteint, tant que le premier signal d'identification, ceux qui suivent et le signal d'identification reçu lorsque le nombre prédéfini est atteint sont respectivement reçus.

4. Procédé selon l'une des revendications précédentes, **caractérisé en ce** que les signaux d'identification sont reçus respectivement en correspondant à la norme VPS ou à la norme RDS ou équivalent.

5. Procédé selon l'une des revendications précédentes, **caractérisé** **en ce** que la comparaison se rapporte à des données contenues dans les signaux d'identification respectifs pour lesquelles des données prédominantes, de préférence l'heure VPS ou RDS ou le jour VPS ou RDS et l'heure VPS ou RDS sont concernées.

6. Procédé selon l'une des revendications précédentes, **caractérisé en ce** que l'appareil n'est pas encore mis dans le mode prédéfini pendant la réception du premier signal d'identification.

7. Procédé selon l'une des revendications précédentes, **caractérisé en ce** qu'il interrompt un fonctionnement de l'appareil côté récepteur qui se fait dans le mode prédéfini lorsqu'un signal d'identification qui caractérise une interruption ou une perturbation côté émetteur et qu'il provoque ensuite à nouveau le fonctionnement de l'appareil côté récepteur dans le mode prédéfini, lors de la nouvelle réception du signal d'identification reçu immédiatement avant l'interruption ou la perturbation.

8. Dispositif de commande pour réaliser le procédé selon l'une des revendications précédentes, **caractérisé en ce**
(a) qu'il présente une mémoire (120, 130) dans laquelle, à partir de l'activation du dispositif de commande, des données prédominantes qui sont contenues dans le premier signal d'identification et des données prédominantes qui sont contenues dans un signal d'identification qui suit le premier signal d'identification et/ou des données prédominantes qui sont contenues dans un signal d'identification qui suit celui-ci sont mémorisées,
(b) un comparateur (14) qui compare les données mémorisées selon (a) entièrement ou partiellement les unes aux autres et
(c) un compteur (137, 140) qui compte le nombre de signaux d'identification constatés différemment selon (b) et à partir duquel, lorsque le nombre prédéfini est atteint, un signal de fin est donné,
(d) un dispositif de coïncidence qui est activé par le signal de fin et qui reste activé aussi longtemps que le signal d'identification reçu lors de l'activation est reçu et par lequel l'appareil est mis dans le mode prédéfini tant que le dispositif de coïncidence reste activé et
(e) un dispositif de coupure, qui est activé par le signal de fin, qui reçoit du dispositif de coïncidence un signal d'identification caractérisant la fin de l'activité du dispositif de coïncidence et qui coupe immédiatement ensuite le dispositif de commande.

9. Dispositif de commande selon la revendication 8, **caractérisé en** **ce** que le dispositif de coïncidence peut également être activé par les signaux d'identification reçus avant que le nombre prédéfini soit atteint.

10. Dispositif de commande selon l'une des revendications précédentes, **caractérisé en ce** que l'appareil côté récepteur est un appareil enregistreur, en particulier un enregistreur son ou un magnétoscope et le mode prédéfini le mode d'enregistrement.

11. Dispositif de commande selon l'une des revendications 1 à 9, **caractérisé en ce** que l'appareil côté récepteur est un appareil récepteur de radiodiffusion, en particulier un récepteur de radio ou un récepteur de télévision et le mode prédéfini le mode reproduction de l'appareil.

12. Dispositif de commande selon la revendication 10 ou 11, **caractérisé en ce** qu'un commutateur pour le déclenchement rapide du mode enregistrement est prévu (commutateur de démarrage rapide VPS), le dispositif de commande étant activé en même temps lors de l'actionnement de celui-ci.

13. Dispositif de commande selon la revendication 12, **caractérisé en ce** que le nombre prédéfini est fixé par le nombre d'autres actionnements du commutateur qui se suivent rapidement les uns les autres qui est réalisé peu après un premier actionnement du commutateur ou qui est fixé par l'actionnement d'un clavier à chiffres.

14. Dispositif de commande selon l'une des revendications précédentes, **caractérisé en ce** que l'on peut entrer si le nombre prédéfini se rapporte au nombre des émissions que l'on doit attendre jusqu'au réglage de l'appareil sur le mode prédéfini ou s'il se rapporte au nombre des parties d'opérations de l'appareil à exécuter dans le mode prédéfini.

15. Dispositif de commande selon l'une des revendications précédentes, **caractérisé en ce** qu'en ce qui concerne le fait d'atteindre le nombre prédéfini de signaux d'identification différents on ne tient compte que des signaux d'identification qui concernent les signaux d'identification affectés aux émissions en les individualisant et parmi lesquels, de préférence, on ne compte pas les signaux d'identification suivants selon la norme VPS : signaux d'identification d'état, signaux d'identification d'interruption ou signaux d'identification dotés de perturbations.
